## Europäisches Patentamt

## European Patent Office

## Office européen des brevets

(19)

(11) Numéro de publication: **0 167 423**
**B1**

(12) ## FASCICULE DE BREVET EUROPEEN

(45) Date de publication du fascicule du brevet:
**09.12.87**

(51) Int. Cl.⁴: **A 47 J 31/20**

(21) Numéro de dépôt: **85401010.5**

(22) Date de dépôt: **22.05.85**

(54) Filtre pour le filtrage et la préparation d'infusions.

(30) Priorité: **22.05.84 FR 8407946**
**19.11.84 FR 8417608**

(43) Date de publication de la demande:
**08.01.86 Bulletin 86/2**

(45) Mention de la délivrance du brevet:
**09.12.87 Bulletin 87/50**

(84) Etats contractants désignés:
**DE GB IT NL SE**

(56) Documents cités:
**FR - A - 1 134 000**
**FR - A - 1 377 528**
**FR - A - 1 527 501**
**FR - A - 2 300 532**
**US - A - 2 211 486**
**US - A - 2 900 896**
**US - A - 3 137 228**

(73) Titulaire: **Bondanini, Faliero, 2, rue Etraz,**
**CH-1003 Lausanne (CH)**

(72) Inventeur: **Bondanini, Faliero, 2, rue Etraz,**
**CH-1003 Lausanne (CH)**

(74) Mandataire: **Faber, Jean-Paul, CABINET FABER 34, rue**
**de Leningrad, F-75008 Paris (FR)**

## Description

La présente invention se rapporte à un filtre plus particulièrement utilisé pour des cafetières présentant un corps cylindrique pourvu d'un couvercle percé d'un trou central dans lequel est guidée et coulisse une tige solidaire d'un piston mobile dans le corps et permèable aux liquides, ledit piston constituant un filtre.

Le corps de telles cafetières est généralement en verre et logé dans un support muni d'une anse. Du fait du matériau utilisé pour former le corps, on est obligé de prévoir des tolérances relativement importantes et le filtre doit pouvoir coulisser librement en absorbant les différences de forme de la paroi interne du corps sans laisser passer le café qui est constitué par une poudre très fine.

La technique antérieure connaît un filtre (voir brevet US-A-2 900 896) qui comprend un premier disque ajouré, une toile métallique et un second disque ajouré dont le bord libre est découpé pour former les languettes élastiques qui sont redressées et qui coopèrent avec la toile métallique elle-même inclinée.

Une telle construction est complexe et par conséquent onéreuse, et, de plus, la surface filtrante est réduite de sorte que le filtre est rapidement colmaté et qu'il doit souvent être démonté pour son nettoyage.

L'un des buts de la présente invention est de réaliser un filtre plus simple à fabriquer, et par conséquent, moins onéreux que les filtres de la technique connue tout en assurant un parfait fonctionnement.

Le filtre, selon l'invention, est destiné à être utilisé avec une cafetière du type présentant un corps cylindrique, un couvercle percé d'un trou de guidage dans lequel coulisse une tige destinée à être, par une extrémité, fixée à une noix d'un piston mobile dans le corps et constituant le filtre, ledit piston étant formé d'un élément filtrant tel qu'une toile métallique ou synthétique enserrée entre deux pièces circulaires avec interposition sur l'élément filtrant d'une pièce circulaire ajourée et dont le bord redressé est découpé pour présenter des languettes élastiques coopérant avec un bord incliné de l'élément filtrant, ce bord formant le bord du piston en contact avec le corps cylindrique de la cafetière, ledit filtre étant caractérisé en ce que l'une des pièces circulaires est formée d'un anneau relié à la noix par des branches et destiné à porter contre la face correspondante de la pièce circulaire ajourée pourvue de languettes élastiques, cette pièce circulaire étant conformée pour présenter un anneau sensiblement de même diamètre interne que l'anneau, relié à la noix par les branches tandis que l'autre pièce circulaire est constituée par un anneau complémentaire de même diamètre interne que les deux autres anneaux et, les branches étant conformées de manière à ménager entre elles et l'élément filtrant un espace libre.

Grâce à cette disposition, on réalise un filtre en une seule pièce dont les bords parfaitement souples et élastiques assurent un bon glissement le long de la paroi interne du corps cylindrique en épousant les moindres inégalités et tout en s'opposant au passage de la poudre, la surface de l'élément filtrant étant très importante ce qui facilite l'enfoncement du piston dans le corps de la cafetière et évite de colmatage.

Suivant encore une autre caractéristique, la noix comporte sur sa face opposée à celle destinée à être fixée à la tige un téton destiné à traverser l'élément filtrant et à être fixé à une bague disposée du côté de l'autre face dudit élément filtrant.

De préférence, les languettes élastiques affectent la forme d'un T et sont terminées par un renflement.

Suivant une caractéristique de détail, la face de l'anneau destinée à coopérer avec l'anneau pourvu des languettes élastiques et la face de la noix pourvue du téton sont situées dans un même plan, les branches radiales étant décalées en hauteur par rapport à ce plan.

De préférence, les branches radiales ont une section en forme de T.

Enfin, l'anneau complémentaire comporte sur sa face destinée à être tournée du côté de l'élément filtrant des tétons, l'anneau pourvu des languettes élastiques présentant des crans correspondants et la face correspondante de l'anneau solidaire des extrémités libres des branches présentant des trous de réception des tétons. On peut ainsi prédisposer les différents éléments et les fixer par soudure à chaud ou aux ultrasons.

L'invention va maintenant être décrite avec plus de détail en se référant à un mode de réalisation particulier donné à titre d'exemple seulement et représenté aux dessins annexés, dans lesquels:

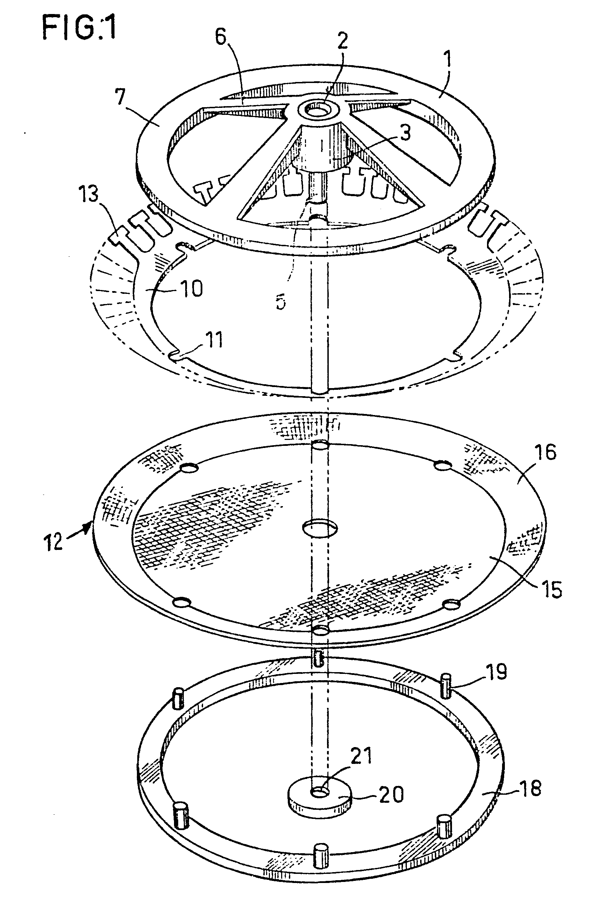

figure 1 est une vue en perspective éclatée d'un filtre, selon l'invention;

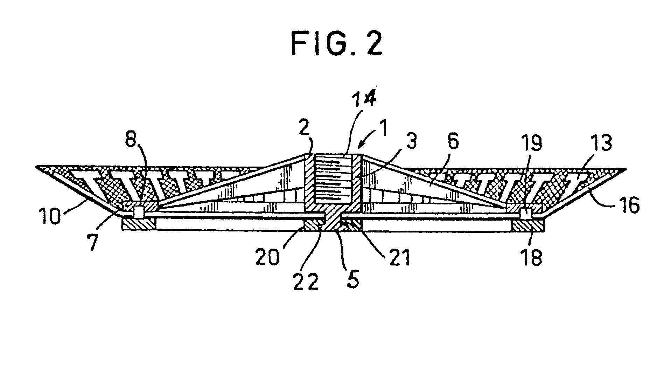

figure 2 est une vue en coupe par un plan passant par l'axe du filtre.

Le filtre représenté aux figures comprend une première pièce 1 présentant une noix centrale 3 dans laquelle est noyé un écrou 2 dont le taraudage 4 s'ouvre sur la face supérieure, tandis que la face inférieure est pourvue d'un téton central 5.

La noix 3 est solidaire de quatre branches radiales 6 dont les extrémités libres sont solidaires d'un anneau 7. Chaque branche 6 a une section en T et s'étend depuis le bord supérieur de la noix 3 vers le bord supérieur de l'anneau 7, ce dernier par son bord inférieur étant situé dans le même plan que le bord inférieur de la noix 3.

L'anneau 7 comporte, régulièrement décalés angulairement des trous 8 s'ouvrant sur sa face inférieure.

Le filtre comporte une toile 12 par exemple une toile métallique à mailles fines, ou une toile en matière synthétique 15 présentant un bord incliné 16.

Contre la toile 15 vient s'appliquer un anneau 10 de préférence en acier revêtu et qui comporte une série de languettes périphériques 13 affectant chacune, la forme d'un T, l'extrémité libre de chaque languette comportant la barre du T.

Les languettes 13 sont redressées de manière à épouser le bord 16 de la toile.

L'anneau 10 présente le long de son bord interne des crans 11 régulièrement décalés angulairement pour coïncider avec les trous 8.

Il est prévu un anneau 18 présentant sur une face des tétons 19 destinés à venir coopérer avec les crans 11 et à s'engager dans les trous 8.

Le téton 5 est destiné à s'engager dans le trou 21 d'une bague 20, ledit trou 21 étant terminé par un évasement 22 destiné à permettre de recevoir une tête formée par écrasement ou déformation à chaud du téton 5.

Comme on le voit aux différentes figures, sur la face de l'anneau 18 pourvue de tétons 19 la toile 15 est posée, l'anneau 10 étant posé sur ladite toile 15 et la pièce 1 venant reposer sur l'anneau 10 par son anneau 7, les tétons 19 s'engageant dans les trous 8, tandis que le téton 5 traverse la toile 15 et s'insère dans le trou 21 de la bague 20.

Les anneaux 18 et 7 sont soudées à la chaleur ou aux ultrasons et ainsi on réalise un filtre monobloc.

Etant donné que les branches 6 sont éloignées de la toile 15 la surface filtrante est largement dimensionnée.


## Revendications

1. Filtre pour appareils tels que cafetières du type présentant un corps cylindrique, un couvercle percé d'un trou de guidage dans lequel coulisse une tige destinée à être, par une extrémité, fixée à une noix (3) d'un piston mobile dans le corps et constituant le filtre, ledit piston étant formé d'un élément filtrant tel qu'une toile métallique ou synthétique (15) enserrée entre deux pièces circulaires avec interposition sur l'élément filtrant d'une pièce circulaire ajourée (10) et dont le bord redressé est découpé pour présenter des languettes élastiques (13) coopérant avec un bord incliné (16) de l'élément filtrant, ce bord formant le bord du piston en contact avec le corps cylindrique de la cafetière, caractérisé en ce que l'une des pièces circulaires est formée d'un anneau (7) relié à la noix (3) par des branches (6) et destiné à porter contre la face correspondante de la pièce circulaire ajourée (10) pourvue de languettes élastiques (13), cette pièce circulaire (10) étant conformée pour présenter un anneau (10) sensiblement de même diamètre interne que l'anneau (7), relié à la noix (3) par les branches (6) tandis que l'autre pièce circulaire est constituée par un anneau complémentaire (18) de même diamètre interne que les deux autres anneaux (10 - 7) et, les branches (6) étant conformées de manière à ménager entre elles et l'élément filtrant (15) un espace libre.

2. Filtre pour appareils tels que cafetières, selon la revendication 1, caractérisé en ce que la noix (3) comporte sur sa face opposée à celle destinée à être fixée à la tige un téton (5) destiné à traverser l'élément filtrant (15) et à être fixé à une bague (20) disposée du côté de l'autre face dudit élément filtrant (15).

3. Filtre pour appareils tels que cafetières, selon la revendication 1, caractérisé en ce que les languettes élastiques (13) affectent la forme d'un T et sont terminées par un renflement.

4. Filtre pour appareils tels que cafetières, selon les revendications 1 et 2, caractérisé en ce que la face de l'anneau (7) destinée à coopérer avec l'anneau (10) pourvu des languettes élastiques (13) et la face de la noix pourvue du téton (5) sont situées dans un même plan, les branches radiales (6) étant décalées en hauteur par rapport à ce plan.

5. Filtre pour appareils tels que cafetières, selon les revendications 1 et 4, caractérisé en ce que les branches radiales (6) ont une section en forme de T.

6. Filtre pour appareils tels que cafetières, selon la revendication 1, caractérisé en ce que l'anneau complémentaire (18) comporte sur sa face destiné à être tournée du côté de l'élément filtrant (15) des tétons (19), l'anneau (10) pourvu des languettes élastiques (13) présentant des crans correspondants (11) et la face correspondante de l'anneau (7) solidaire des extrémités libres des branches (6) présentant des trous de réception des tétons (19).


## Patentansprüche

1. Filter für Geräte wie Kaffeemaschinen der Art, die einen zylindrischen Mantel und einen Deckel aufweist, der von einer Führungsbohrung durchbrochen ist, in der eine Stange verschiebbar ist, die für die Verbindung ihres einen Endes mit einer Muffe (3) eines Kolbens vorgesehen ist, der in dem Mantel bewegbar ist und das Filter bildet, wobei dieser Kolben mit einem Filterelement versehen ist, beispielsweise einem Sieb (15) aus Metall oder Kunststoff, das zwischen zwei kreisrunde Teile unter Zwischenfügen eines auf dem Filterelement befindlichen, kreisrunden durchbrochenen Teils (10) eingelegt ist, dessen nach oben gerichteter Rand mit Ausnehmungen versehen ist, um elastische Zungen (13) zu bilden, die mit einem geneigten Rand (16) des Filterelements zusammenwirken, der den Kolbenrand bildet, der mit dem zylindrischen Mantel der Kaffeemaschine in Berührung ist, dadurch gekennzeichnet, dass eines der kreisrunden Teile als Ring (7) ausgebildet ist, der mit der Muffe (3) durch Arme (6) verbunden und zur Anlage an der zugekehrten Seite des durchbrochenen, kreisrunden Teils (10) vorgesehen ist, das mit den elastischen Zungen (13) versehen ist, dass dieses kreisrunde Teil (10) so ausgelegt ist, dass es einen Ring (10) mit im wesentlichen gleichem Innendurchmesser wie der Ring (7) bildet, der durch die Arme (6) mit der Muffe (3) verbunden ist, während das andere kreisrunde Teil durch einen komplementären Ring (18) vom gleichen Innendurchmesser wie die beiden anderen Ringe (10 - 7) gebildet ist, und dass die Arme (6) in der Weise ausgebildet sind, dass zwischen ihnen und dem Filterelement (15) ein Freiraum vorhanden ist.

2. Filter nach Anspruch 1 für Geräte wie Kaffeemaschinen, dadurch gekennzeichnet, dass die Muffe (3) auf der Endfläche, die der zur Befestigung an der Stange bestimmten Seite entgegengesetzt ist, einen Zapfen (5) aufweist, der zum Durchgreifen des Filterelements (15) und zur Befestigung an einem Ring (20) vorgesehen ist, der auf der anderen Seite des Filterelements (15) angeordnet ist.

3. Filter nach Anspruch 1 für Geräte wie Kaffeemaschinen, dadurch gekennzeichnet, dass die elastischen Zungen (13) die Form eines T besitzen und in einer Erweiterung endigen.

4. Filter nach den Ansprüchen 1 und 2 für Geräte wie Kaffeemaschinen, dadurch gekennzeichnet, dass diejenige Seite des Rings (7), die für die Zusammenwirkung mit dem mit den elastischen Zungen (13) versehenen Ring (10) vorgesehen ist, sowie diejenige Endfläche der Muffe, die mit dem Zapfen (5) versehen ist, in der gleichen Ebene angeordnet sind und dass die radialen Arme (6) gegenüber dieser Ebene höhenversetzt sind.

5. Filter nach den Ansprüchen 1 und 4 für Geräte wie Kaffeemaschinen, dadurch gekennzeichnet, dass die radialen Arme (6) einen T-förmigen Querschnitt besitzen.

6. Filter nach Anspruch 1 für Geräte wie Kaffeemaschinen, dadurch gekennzeichnet, dass der komplementäre Ring (18) auf derjenigen Seite, die dazu bestimmt ist, dem Filterelement (15) zugekehrt zu sein, Zapfen (19) besitzt, dass der mit den elastischen Zungen (13) versehene Ring (10) zugeordnete Ausnehmungen (11) aufweist und dass die zugeordnete Seite des mit den freien Enden der Arme (6) verbundenen Rings (7) Aufnahmelöcher für die Zapfen (19) besitzt.

## Claims

1. A filter for appliances such as coffee-pots, of the type exhibiting a cylindrical body, a lid pierced with a guidehole in which slides a rod intended for being attached by one end to a hub (3) of a piston which is movable in the body and forms the filter, the said piston being formed of a filter element such as a metallic or synthetic fabric (15) clamped between two circular pieces with the interposition on the filter element of a perforated circular piece (10) the turned-up edge of which is cut out in order to exhibit small elastic tongues (13) which cooperate with a sloping edge (16) of the filter element, this edge forming the edge of the piston which is in contact with the cylindrical body of the coffee-bot, characterized in that one of the circular pieces is formed of a ring (7) connected to the hub (3) by arms (6) and intended for bearing against the corresponding face of the perforated circular piece (10) which is provided with small elastic tongues (13), this circular piece (10) being shaped in order to exhibit a ring (10) substantially of the same inner diameter as the ring (7) which is connected to the hub (3) by the arms (6) whilst the other piece consists of a complementary ring (18) of the same inner diameter as the other two rings (10 - 7), and the arms (6) being shaped so as to arrange between them and the filter element (15) a free space.

2. A filter for appliances such as coffee-pots, as in Claim 1, characterized in that the hub (3) includes on the face of it opposite from that intended for being attached to the rod a stud (5) intended for passing through the filter element (15) and for being attached to a ring (20) arranged next to the other face of the said filter element (15).

3. A filter for appliances such as coffee-pots, as in Claim 1, characterized in that the small elastic tongues (13) assume the shape of a T and terminate in an enlargement.

4. A filter for appliances such as coffee-pots, as in Claims 1 and 2, characterized in that the face of the ring (7) which is intended for cooperating with the ring (10) provided with small elastic tongues (13) and that face of the hub which is provided with the stud (5) are situated in one and the same plane, the radial arms (6) being offset in height with respect to this plane.

5. A filter for appliances such as coffee-pots, as in Claims 1 and 4, characterized in that the radial arms (6) have a T-shaped cross-section.

6. A filter for appliances such as coffee-pots, as in Claim 1, characterized in that the complementary ring (18) includes on the face of it intended for being turned next to the filter element (15) studs (19), the ring (10) which is provided with small elastic tongues (13) exhibiting corresponding notches (11) and the corresponding face of the ring (7) which is integral with the free ends of the arms (6) exhibiting holes for receiving the studs (19).

FIG:1

# FIG. 2

0 167 423